(19) Europäisches Patentamt
European Patent Office
Office européen des brevets

(11) EP 2 733 842 B1

(12) **EUROPEAN PATENT SPECIFICATION**

(45) Date of publication and mention
of the grant of the patent:
**04.07.2018 Bulletin 2018/27**

(51) Int Cl.:
**H02P 21/00** *(2016.01)*

(21) Application number: **12192811.3**

(22) Date of filing: **15.11.2012**

(54) **Controlling an electrical converter**

Steuerung eines elektrischen Wandlers

Contrôle d'un convertisseur électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.05.2014 Bulletin 2014/21**

(73) Proprietor: **ABB Schweiz AG**
**5400 Baden (CH)**

(72) Inventors:
• **Zanarini, Alessandro**
**5400 Baden (CH)**
• **Peyrl, Helfried**
**8003 Zürich (CH)**
• **Boechat, Marc-Alexandre**
**1723 Marty (CH)**
• **Besselmann, Thomas**
**5413 Birmenstorf (CH)**

(74) Representative: **ABB Patent Attorneys**
**C/o ABB Schweiz AG**
**Intellectual Property (CH-LI/IP)**
**Brown Boveri Strasse 6**
**5400 Baden (CH)**

(56) References cited:
• STEFAN RICHTER ET AL: "High-speed online MPC based on a fast gradient method applied to power converter control", AMERICAN CONTROL CONFERENCE (ACC), 2010, IEEE, PISCATAWAY, NJ, USA, 30 June 2010 (2010-06-30), pages 4737-4743, XP031719551, ISBN: 978-1-4244-7426-4
• KOURO S ET AL: "Model Predictive Controlâ A Simple and Powerful Method to Control Power Converters", IEEE TRANSACTIONS ON INDUSTRIAL ELECTRONICS, IEEE SERVICE CENTER, PISCATAWAY, NJ, USA, vol. 56, no. 6, 1 June 2009 (2009-06-01), pages 1826-1838, XP011249061, ISSN: 0278-0046
• IQBAL A ET AL: "Model predictive control of a three-to-five phase matrix converter", PREDICTIVE CONTROL OF ELECTRICAL DRIVES AND POWER ELECTRONICS (PRECEDE), 2011 WORKSHOP ON, IEEE, 14 October 2011 (2011-10-14), pages 36-39, XP032343481, DOI: 10.1109/PRECEDE.2011.6078685 ISBN: 978-1-4577-1912-7
• RIVERA M ET AL: "A simple predictive voltage control method with unity displacement power factor for four-leg indirect matrix converters", POWER ELECTRONICS AND MOTION CONTROL CONFERENCE (EPE/PEMC), 2012 15TH INTERNATIONAL, IEEE, 4 September 2012 (2012-09-04), pages DS2c.5-1, XP032311894, DOI: 10.1109/EPEPEMC.2012.6397289 ISBN: 978-1-4673-1970-6

**Description**

FIELD OF THE INVENTION

The invention relates to a method and a controller for controlling an electrical converter as well as to an electrical converter.

BACKGROUND OF THE INVENTION

Electrical converters are used for converting a first current, for example a DC current or an AC current of a first frequency, into a second current, for example a further DC or AC current with a further frequency.

In particular, power electronic converters, which may be connected to an electrical machine or may be interconnected to electrical grids, usually comprise a large number of power semiconductors that have to be switched and controlled to generate the desired output current. Besides the minimization of differences between reference quantities and actual determined quantities (such as flux and torque), important objects of the control may be short response times of the controller, low harmonic distortion of the generated current and low switching losses.

Some or all of these objects may be formulated as an objective function that receives as input variables possible future states of the electrical converters and that outputs a cost value that has to be minimized to reach to above mentioned objects.

The future state (for example comprising future switching sequences, future currents, future voltages, etc.) may then be used to determine the next switching state applied to the converter.

As an example, consider model predictive pulse pattern control (MP3C), which is described in more detail in EP 2 469 692 A1. MP3C is a Model Predictive Control (MPC) based method that combines the merits of Direct Torque Control (DTC) and Optimized Pulse Patterns (OPP), two classical and well-established approaches for controlling a motor's torque and flux in medium voltage drive applications. The result may be a control and modulation strategy that yields very short response times during transients, a fast rejection of disturbances, and a nearly optimal ratio of harmonic current distortion per switching frequency at steady-state operation due to the usage of OPPs. The method may be applicable to power electronic converters connected to an electrical machine as well as to the electrical grid.

MP3C inherits its low harmonic current distortion from using pre-computed optimized pulse patterns which may be adapted online to achieve optimal performance during transients. In its original form, the method requires the solution of a quadratic programme (QP) at every sampling instant to determine the necessary corrections of the switching instants of the pre-computed pulse pattern. However, standard QP solvers usually have high computational demands.

MP3C is but one example where a quasi-instantaneous solution of an optimization problem is required. Another application example may be the control of power electronics converters where the controller computes the modulation index. This may be achieved with a controller cascade with an outer voltage control loop and an inner current control loop both based on MPC. The current controller may require the solution of a QP while the voltage controller may solve a polynomial optimization problem.

The article "Real-time input-constrained MPC using fast gradient methods," in Decision and Control, 2009 held jointly with the 2009 28th Chinese Control Conference, CDC/CCC 2009, Proceedings of the 48th IEEE Conference on, 2010, pp. 7387-7393 by S. Richter, C. N. Jones, and M. Morari, shows fast gradients methods for computing the optimum cost value for a class of objective functions.

The IEEE paper "High-speed online MPC based on a fast gradient method applied to power converter control", American Control Conference 2010, Piscataway, NJ, USA, Stefan Richter; Sebastien Mariethoz; Manfred Morari discloses a converter control which determines switching control signals for the converter from possible future converter states based on gradient computation and projection of variables.

DESCRIPTION OF THE INVENTION

It is an object of the invention to provide controllers and control methods that have short response times, that produce low harmonic distortion and that generate low switching losses.

This object is achieved by the subject-matter of the independent claims. Further exemplary embodiments are evident from the dependent claims and the following description.

An aspect of the invention relates to a method for controlling an electrical converter, for example a medium voltage converter, which may be a DC-to-AC, an AC-to-DC or AC-to-AC converter. The method may be implemented in a controller of the electrical converter, for example an FPGA or DSP. The electrical converter may be part of a system comprising the electrical converter and an electrical machine such as an electrical motor or electrical generator. However, the electrical converter may also connect a first electrical grid with a second electrical grid.

According to an embodiment of the invention, the method comprises the steps of: receiving an actual electrical quantity of the electrical converter and a reference quantity; determining at least one possible future state (or a plurality of possible future states) of the electrical converter by minimizing an objective function based on the actual electrical quantity and the reference quantity; and determining the next switching state for the electrical converter from the possible future state(s) of the electrical converter.

The control method may be a loop control method, which may minimize a difference between one or more actual electrical quantities (for example an actual output current, an actual output voltage, an actual flux and/or an actual torque), which may be measured or indirectly determined from measured quantities, and reference quantities (for example a reference output current, a reference output voltage, a reference flux, a reference actual torque).

Furthermore, the control method may minimize further control objectives as described above. All the control objectives may be encoded in an objective function, which maps quantities like predicted states and inputs as optimization variables to a cost value. The electric quantities may be the actual and reference quantity and further quantities of a future state of the converter and/or the system, which, for example, may comprise future voltages, currents, fluxes, torques, switching states of semiconductor switches, etc.

The objective function and/or the future state may be based on a physical model that may be derived from the setup of the electrical converter and/or the overall electrical system.

In each control cycle, the control method determines a next switching state for the semiconductor switches of the electrical converter by choosing the future state, which yields to an objective function with the optimal (for example lowest) cost value.

The objective function is iteratively optimized by: calculating optimized unconstrained optimization variables based on computing a gradient of the objective function with respect to optimization variables; and calculating optimization variables for a next iteration step by projecting the unconstrained optimization variables on constraints. For example, the objective function may be calculated with the fast gradient method as described in the article of Richter et al.

The computation of the gradient and/or the projection is performed in parallel in more than one computing unit. A computing unit may be a unit or part of an FPGA or a core of a multi-core-processor. A multi-core processor may comprise more than one processor on one chip or may comprise several processors on different chips.

For example, the computation of the gradient may be performed in parallel in more than one computing unit. Alternatively or additionally, the computation of the gradient may be performed in parallel to the projection. The computation of the gradient and/or the projection may be performed in parallel threads and/or may be pipelined.

According to an embodiment of the invention, the iteration further comprises: grouping the optimization variables into groups, such that each group of optimization variables is projectable separately from the other groups. The electrical quantities may be grouped with respect to electrical phases of the electrical converter and/or into physical similar or equal quantities, for example into currents, voltages, switching states, fluxes, etc. Furthermore, the grouping may be done with respect to the projection, such that each group may be projected independent or separately from each other. The grouping may also be done with respect to sub-matrices of a matrix used for calculating the gradient, wherein the sub-matrices are substantially independent from each other (i.e. there may be only few matrix entries outside of the sub-matrices).

The computation of the gradient and/or the projection of the unconstrained optimization variables may be performed in parallel for each group using several computing units of the controller. In such a way, nearly no intercommunication between the computing units may be necessary.

According to an embodiment of the invention, the optimized unconstrained optimization variables are calculated by adding the negative and/or appropriately scaled gradient of the objective function to the optimization variables. In other words, the optimization variables may be optimized by stepping in anti-gradient direction towards the optimum.

According to an embodiment of the invention, the iteration comprises scaling the constrained optimization variables by scaling factors. For example, the difference between the projected (i.e. constrained) optimized optimization variables and the optimization variables of the previous iteration step may be scaled by the scaling factors, to tune the calculation of the optimized optimization variables, as described below. The scaling may be performed in more than one computing unit of the controller. The scaling may be performed in parallel to at least one of the gradient calculation and the projection.

According to an embodiment of the invention, the gradient of the objective function comprises a matrix multiplied by a vector of optimization variables. This may be the case, when the objective function constitutes a quadratic programming problem.

According to an embodiment of the invention, a multiplication of entries of a column of the matrix with optimization variables is performed in parallel in more than one computational unit. This may be suitable for executing of the iterations in an FPGA, since the computations may be pipelined by performing calculation in parallel for each column of the matrix.

According to an embodiment of the invention, a multiplication of entries of a row of the matrix with optimization variables is performed in parallel in more than one computational unit. This may be suitable for a parallel executing of the iterations in different threads, since there may be only little inter-thread communication.

According to an embodiment of the invention, the method may comprise the steps of: determining a sequence of future switching states by minimizing the objective function; and using the first future state from the sequence of future switching states as the next switching state to be applied to the electrical converter. The control method may be based on a moving horizon, i.e. future states for not only the next but a number (horizon) of future control cycles may be determined in every cycle.

A further aspect of the invention relates to a controller for an electrical converter, wherein the controller is adapted for executing the method as described in the above and in the following. It has to be understood that features of the method as described in the above and in the following may be features of the controller as described in the above and in the following and vice versa.

The controller may comprise the computing units, which are used for executing the above mentioned method steps in parallel. The controller may comprise an FPGA, CPU and/or GPU for providing the computing units.

The part of the controller solving the optimization may be implemented on an FPGA or a multi-core based control system, which has been programmed to admit the actual quantities (for example system measurements) and other control problem parameters (for example of the future state) as inputs, execute the necessary calculations and return the manipulated variables that describe the control inputs.

According to an embodiment of the invention, the controller comprises an Field Programmable Gate Array (FPGA), which comprises at least one of: at least one matrix multiplication unit for multiplying the optimization variables with a matrix; at least one a projection unit for projecting the unconstrained optimization variables; at least one scaling unit for scaling the constrained optimization variables by scaling factors.

The computations may be performed in parallel in at least two matrix multiplication units, at least two projection units and/or at least two scaling units. The computations may be pipelined such that they are performed in parallel in a matrix multiplication unit, a projection unit and/or a scaling unit.

The gradient-based optimization method may be implemented in an FPGA for solving optimization problems in the microsecond range. Combining the algorithmic advantages of gradient-based algorithms in MPC applications with the computational strengths of an FPGA implementation may allow solving a quadratic programming problem of MP3C with large prediction horizons optimally, which may result in improved control performance, for example torque and stator flux may be kept close to their references during transients while the harmonic current distortion is at its physical minimum.

The controller may comprise a hybrid architecture, such as a combination of a CPU and an FPGA (for example on the same chip). For example, the matrix-vector multiplication is done on an FPGA, and then (possibly complicated) projections are performed on a CPU.

If the control system is combined with an FPGA, the CPU or DSP of the controller may set up the control problem by writing the necessary data on pre-defined memory positions. The FPGA may either directly measure/estimate the actual quantities and may solve the resulting MPC problem, or may receive these values from the DSP/CPU. Similarly, the FPGA may either directly transmit the optimal control actions to a modulator, or return the result of the calculation to the DSP/CPU for further processing.

According to an embodiment of the invention, the gradient of the objective function comprises a vector part that is based on a matrix equation of the actual quantity and/or the reference quantity. The matrix multiplication unit may be used for calculating the vector part before calculating the unconstrained optimization variables. The vector part may have to be calculated once in each cycle from the actual and/or reference quantities. To save independent computation units, a matrix multiplication unit already used for calculation the matrix vector multiplication of the objective function may also calculate the matrix vector multiplication of the vector part.

According to an embodiment of the invention, the controller comprises a multi-core processor, wherein the controller is adapted for executing the computation of the gradient and/or the projection for groups of optimization variables in parallel in more than one core of the multi-core processor. The computation of the gradient, the projection and/or the scaling for one group of optimization variables may be performed in one thread, which is executed in one of the cores.

A further aspect of the invention relates to an electrical converter comprising a controller as described in the above and in the following.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 schematically shows an electrical converter according to an embodiment of the invention.

Fig. 2 shows a flow diagram for a method for controlling a converter according to an embodiment of the invention.

Fig. 3 schematically shows a controller with an FPGA according to an embodiment of the invention.

Fig. 4 shows a diagram explaining the operation of the FPGA of Fig. 3.

Fig. 5 schematically shows a controller with a multi-core processor according to an embodiment of the invention.

Fig. 6 shows a diagram explaining the operation of the controller of Fig. 5.

In principle, identical parts are provided with the same reference symbols in the figures.

DETAILED DESCRIPTION OF EXEMPLARY EMBODIMENTS

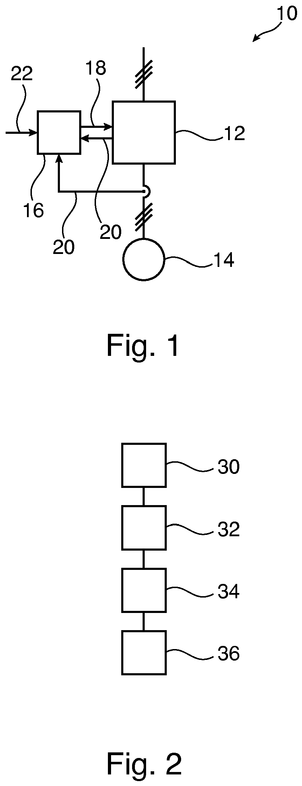

Fig. 1 shows a system 10 comprising an electrical converter 12 that may be a power electronics converter like a modular multi-level converter or any other type of converter. In the example shown in Fig. 1, the converter 12 converts a three-phase input current into a three-phase output current. However, any other type of configuration may be possible, such as a DC-to-AC converter or an AC-to-DC converter.

The system 10 comprises a load 14 that is supplied by the electrical converter 12, for example an electrical machine 14 or a further electrical grid 14.

For switching the currents, the converter 12 comprises a large number of semiconductor switches that are controlled by a controller 16.

In general, the controller 16 calculates the next switching state 18 that has to be applied to the converter 12. The next switching state 18 is determined from actual electrical quantities 20 of the system 10 and one or more reference quantities 22 based on the minimization of an objective function that encodes the control objectives of the electrical system 10.

The actual electrical quantities 20 may comprise measurements and/or estimations and may stem from the electrical converter 12, the load (machine or grid) 14, and/or from the electrical network supplying the electrical converter 12.

Fig. 2 shows a method for controlling the converter 12.

In step 30, the controller 16 receives one or more actual electrical quantities, for example from measurement devices attached to the controller 16 or the load 14, and one or more reference quantities 22.

The actual electrical quantities 20 may comprise measured currents, for example at the output of the converter 12 or inside of the converter 12, measured voltages measured at the output of the converter 12 or inside of the converter, the flux and the torque in an electrical machine.

The reference quantities 22 may comprise a reference current, a reference voltage, a reference flux and so on.

In step 32, from the actual quantities 20 and the reference quantities 22, the controller 16 determines one or more future states of the converter 12, which may comprise future switching states and/or future electrical quantities.

For example, the controller 12 may determine a sequence of future electrical quantities by generating a sequence of possible future switching states and deriving the future electrical quantities therefrom. In this step, a model of the converter 12 and/or the load 14 may be used for calculating the future electrical quantities.

As another example, the controller 16 may determine a pre-calculated pulse pattern as future switching state as described in EP 2 469 692 A1.

In step 34, the controller 16 optimizes (for example minimizes) an objective function for determining the future state with an optimal cost value. In general, the objective function is a function mapping the future states to a cost value.

For example, the objective function may minimize the difference between future electrical quantities and the reference quantities by also minimizing harmonic distortions in the input and/or output currents and/or by minimizing the switching losses of the converter 12.

The objective function may be derived from the setup of the system and physical laws.

In step 36, the next switching state is determined from a future state with optimized objective function.

For example, the controller 16 may comprise a modulator, which receives a reference voltage based on the optimized future state and a further controller determines the next switching state from the reference voltage.

As a further example, when the future states comprises a sequence or series of future states, a moving horizon policy may be used and only the switching state of the next future state may be chosen.

In the following, the optimization of the objective function $f(z)$ in step 34 will be explained in more detail. In many cases, the objective function $f(z)$ is a polynomial function of its input variables $z$, i.e. may be the values of the actual state and the future states of the system 10.

The above mentioned optimization problem may be formulated as a continuous optimization problem of the form

$$\min_z f(z) \; s.t. \; z \in \mathbb{Z}$$

with the optimization variable $z \in \mathbb{R}^{n_z}$, objective function $f(z)$ and the constraint set $Z = Z_1 \times Z_2 \times \blacksquare \; \blacksquare \; \blacksquare \times Z_N$ resembling the Cartesian product of simple sets. A set may be called simple, if the projection (see below) of a point onto the set is computationally lightweight in comparison to solving the original optimization problem. A simple set may be seen as a group of constraints that are interrelated with each other.

For example, due to the form of the physical laws (such as Kirchhoffs laws), the objective function is often quadratic, which yields to a quadratic optimization problem of the form

$$\min_z z^T H z + g^T z \; s.t. \; z \in \mathbb{Z}$$

where $H \in \mathbb{R}^{n_z \times n_z}$ is a symmetric positive semidefinite matrix, $g \in \mathbb{R}^{n_z}$ a vector.

As will become important in the following, the gradient $\nabla f(z)$ of this quadratic objective function is given by $2Hz + g$.

In the article of Richter et al., mentioned in the beginning, two possible methods for solving the problems above for MPC applications were proposed: the gradient and the fast gradient method.

The fast gradient method is restated here as an algorithm. The algorithm requires an initial point $z_0 \in Z$, $y_0 = z_0$ as input variable, the number of iterations $i_{max}$, the Lipschitz constant L and scaling factors $\beta_0, \dots, \beta_{imax-1}$.

**for** $i = 0 : i_{max-1}$ **do**

$$\tilde{z}_{i+1} \; = \; y_i - \frac{1}{L}\nabla f(y_i) \; = \; y_i - \frac{1}{L}(2Hy_i + g) \; = \; My_i + \tilde{g}$$

$$z_{i+1} \; = \; \Pi_z(\tilde{z}_{i+1})$$

$$y_{i+1} \; = \; z_{i+1} + \beta_i(z_{i+1} - z_i)$$

**end for**

The algorithm optimizes the variables z with respect to the objective function $f(z)$.

In the first line in the iteration loop, the algorithm calculates unconstrained optimization variables $\tilde{z}_{i+1}$ from the previously calculated optimization variables $y_i$ during the previous iteration step. This is done by stepping in the anti-direction of the gradient $\nabla f(z)$.

In the second line in the iteration loop, the algorithm projects the unconstrained optimization variables $\tilde{z}_{i+1}$ onto constrained optimization variables $z_{i+1}$.

In the third line in the iteration loop, the algorithm scales the constrained optimization variables $z_{i+1}$ by the scaling factors $\beta_0, \dots, \beta_{imax-1}$ to calculate the optimization variables $y_{i+1}$ for the next iteration step. By scaling the optimization variables, the step in the anti-direction of the gradient $\nabla f(z)$ may be corrected.

The symbol $\Pi_Z$ denotes the projection on the constraint set Z. For example, some of the future states are restricted to certain bounds or may only comprise discrete values. In these cases the projection $\Pi_Z$ may restrict the unconstrained values $\tilde{z}$ to the constrained values z by restricting them to the bounds and/or by setting them to the next allowed discrete value.

In an MPC problem, the optimization variables z usually represent the control inputs after the state predictions have been eliminated using the state update equations. The sets $Z_i$ can then represent the constraints on the control inputs over the prediction horizon. In the presence of state constraints, the elimination of the state predictions can produce constraint sets $Z_i$ which are not simple any more. However, it may be still possible to solve the MPC problem with a gradient method via the nested solution of optimization problems having only simple sets. Consequently, the provided method may also be used for the solution of general MPC problems with state constraints or soft-constraints on states/inputs.

Furthermore, note that in an MPC setup, the vector $g$ is typically a function of the current measured (or estimated) actual quantities and the reference quantities, and consequently needs to be updated in each cycle of the control loop.

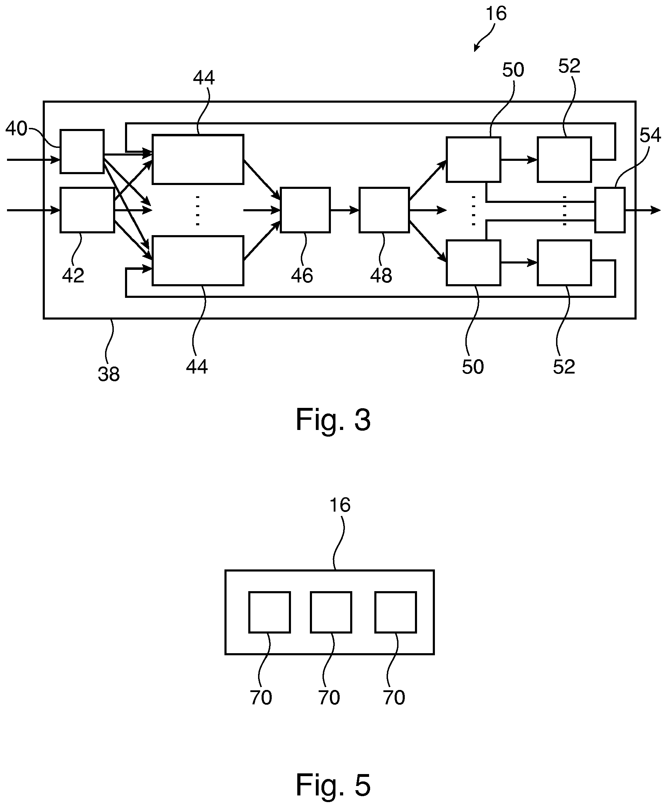

The above described control method using the optimization algorithm for optimizing the objective function may be implemented in an FPGA (see Fig. 3) or a multi-core controller (see Fig. 5) in the following ways.

The optimization variables z are grouped into *N* groups, $z = [z_1^T \; z_1^T \; ... \; z_N^T]$, where $z_i \in \mathbb{R}^{n_z}$, $\sum n_i = n_z$. The sizes $n_i$ of the groups may be equal. However, it may be possible that the sizes of all groups are not equal.

Preferably all elements of one group are subject to one simple set $z_j \in Z_j$, but also other groupings such as single elements or the whole set of optimization variables in one group are possible.

The following discussion will focus on a quadratic programming problem with a quadratic objective function *f(z)* = $z^THz + g^Tz$.

Using the partitioning, the matrix-vector multiplication for the computation of the gradient step can be stated as

$$Mz = \begin{bmatrix} c_1 & c_2 & \cdots & c_N \end{bmatrix} \begin{bmatrix} z_1 \\ z_2 \\ \vdots \\ z_N \end{bmatrix}$$

where each $c_j$ denotes a set of $n_i$ column vectors of the matrix *M = I-2/LH.*

This partitioning may be useful for an implementation in an FPGA.

Fig. 3 shows a controller 16 with an FPGA 38 that has a number of computational units, i.e. a data input unit 40, a matrix unit 42, one or more matrix multiplication units 44, an adder tree unit 46, a buffer unit 48, a number of projection units 50, and a number of beta units 52 and a data output unit 54 that implement the algorithm shown above.

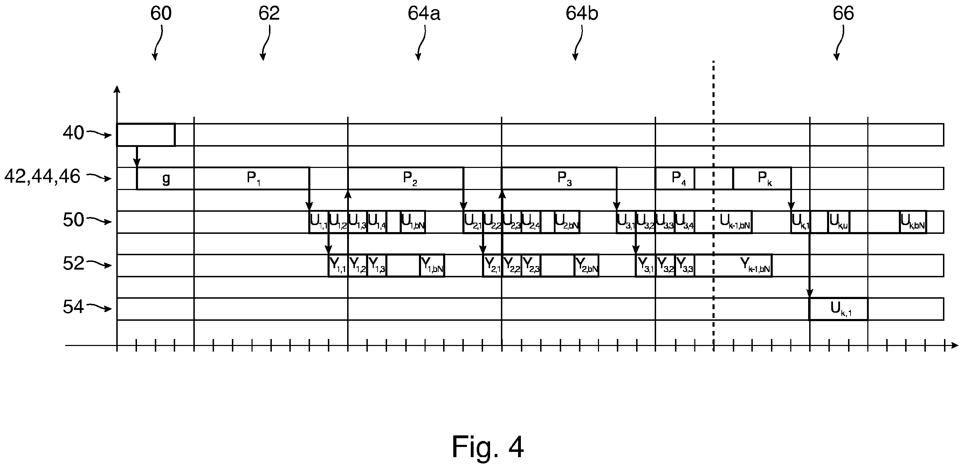

The operation of the FPGA 40 will be explained with respect to Fig. 4 showing a Gantt chart of a possible implementation of the fast gradient method (Algorithm) on an FPGA.

The horizontal lines represent the computation units: a data input unit 40, a matrix unit 42, matrix-vector multiplication unit 44 and adder tree unit 46, projection unit 50, beta units 52 and data output unit 54. The horizontal axis represents the time, each notch indicating one clock cycle. The boxes indicate use of the respective computation unit, while the arrows visualise data transfer from one computation unit to another.

In section 60, the vector part $\tilde{g}$ of the gradient of the objective function f(z) is calculated. The component $\tilde{g}$ of the gradient depends on the actual and reference quantities of the converter 12 and/or load 14 and has to be computed every cycle of the controller 16 (in which all iterations for optimizing the objective function are performed).

Usually, $\tilde{g}$ is based on a matrix equation and the matrix multiplication units 44 may be used for calculating $\tilde{g}$. In section 60, the respective matrix for $\tilde{g}$ is loaded into the matrix multiplication units 44 by the matrix unit 42. Furthermore, the input data unit loads 40 loads the actual and reference quantities into the matrix multiplication units 44.

Also in section 60, the initial values of the optimization variables z may be loaded into the matrix multiplication unit 44.

In section 62, the first iteration is performed by the matrix multiplication units 44 to compute $c_j z_j$ and by the adder tree unit 46 to add the result to a register or buffer unit 48 (in which $\tilde{g}$ is already stored, alternatively $\tilde{g}$ can be stored in the matrix multiplication units 44).

If only one matrix multiplication unit 44 is used, at each clock cycle one group $z_i$ is passed to this unit, such that after N clock cycles, $Mz+\tilde{g}$ is obtained. More than one matrix multiplication units 44 may be used for calculating more than one group in each clock cycle.

At the end of section 62, the first group of optimization variables $z_i$ is projected by the constraint projection units 50 onto the respective constraints and the result is scaled by the beta units 52.

When the first group $z_i$ has been scaled, the matrix multiplication units 44 already may start again to perform the next iterations. During these calculations, the next groups of optimization variables are projected and scaled in parallel and then passed to the matrix multiplication units 44.

If the elements of the optimization vector z are grouped such that each group $z_i$ can be projected separately, it is possible to increase the utilisation of the computation units of the FPGA 38 by pipelining the groups $z_i$ through the computational units and thus to save space on the FPGA without a big delay in processing time.

In section 64a, 64b, etc. further iterations are performed. When the limit of $i_{max}$ iterations has been reached, in section 66, the data output unit 54 reads out the result. Note that in the case of a moving horizon, the data output unit may need to read out only the first elements of the optimized variables z, which contain the next future state of the converter 12.

As an alternative, the matrix-vector multiplication may be carried out not as column-scalar multiplication but as a row-vector multiplication:

$$Mz = \begin{bmatrix} r_1 \\ r_2 \\ \vdots \\ r_N \end{bmatrix} z$$

where $r_i$ is a set of $n_i$ rows of *M*. The row-vector formulation may be particularly appealing for multi-core platforms as the amount of inter-core communication is lower than in the column scalar approach.

Fig. 5 shows a controller 16 that comprises a plurality of single-core processors 70, which may be seen as other types of computing unit 70 of the controller 16 (compared to the computing units 40 to 54 of the FPGA 38).

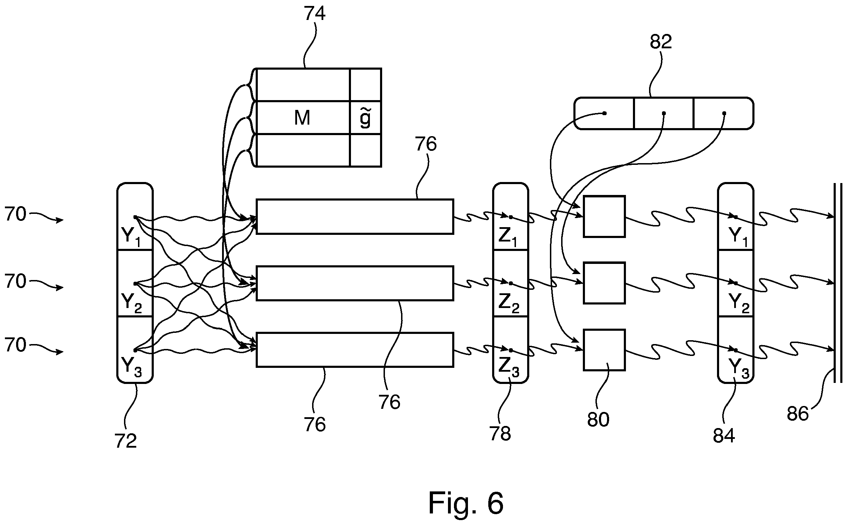

Fig. 6 shows a diagram with functional modules and buffers that are executed on the controller of Fig. 5. The arrows indicate the flow of data between the blocks.

In a first step, the initial values for the optimization variables are stored in an input buffer 72. As indicated in Fig. 6, the optimization variables $y_i$ are grouped into three groups. However, any other number of groups is also possible.

Furthermore, the entries of the matrix M and the vector $\tilde{g}$ are stored in a matrix buffer 74.

After that, a gradient and projection module 76 is executed in the cores 70 in parallel. The rows of the matrix buffer 74 associated with the respective group of optimization variables $z_i$ is loaded from the matrix buffer 74 and multiplied with all variables from the buffer 72 and projected to calculate the optimized optimization variables $z_i$, which are stored in a buffer 78.

After the respective variables $z_i$ have been calculated, a scaling module 80 is executed in each core 70, which calculates the scaled optimization variable $y_i$ for the next iteration step. In this step, the optimized variables $z_i$ from the last step are loaded from a buffer 82.

At the end of the iteration, all cores have to wait for a thread barrier 86 to synchronize the execution of the next iteration.

The buffers 72, 84 may be implemented as a read buffer 72 and a write buffer 84 with two pointers that are swapped at the thread barrier to avoid unnecessary copying.

Another embodiment is the implementation of a gradient-based method for the solution of more general optimization problems. Instead of a quadratic objective function *f(z)*, *f(z)* may be a general differentiable objective function, with the gradient $\nabla f(z)$. The (fast) gradient method employed on a non-convex differentiable objective function does not guarantee convergence to the global minimum but rather to a local minimum. An implementation on an FPGA is still possible albeit the pipelining of the computational units 50 to 54 described above should be adapted to the structure of the problem at hand. For simplicity, we assume that $z_i$ are scalars noting it is straight-forward to extend the presented discussion to non-scalar partitions.

If *f(z)* is a multivariate polynomial of degree *d,* the gradient $\nabla f(z)$ consists of $n_z$ polynomials with a maximum degree of *d-1.* As an explanatory example, consider a polynomial objective *function*

$$f(z) = z_1^2 z_2^2 + z_1^2 z_2 + z_1 z_2^2$$ with gradient as follows:

$$\nabla f(z) = \begin{pmatrix} 2z_1 z_2^2 + 2z_1 z_2 + z_2^2 \\ 2z_1^2 z_2 + z_2^2 + 2z_1 z_2 \end{pmatrix}$$

For example, a parallel implementation may proceed by computing row by row the gradient evaluation.

To accelerate the computation and save space on an FPGA or multi-core processor, the evaluation unit may reuse multiplication results for example by applying a multivariate Horner scheme.

For illustration, consider the polynomial $2z_1 z_2^2 + 2z_1 z_2 + z_2^2$ of the example presented earlier. A naive implementation of the polynomial evaluation would require 6 multipliers. Instead, by using a simple Horner scheme, we can rewrite it as: $z_2(z_2(2z_1 + 1) + 2z_1)$ leading therefore to 4 multiplications. Moreover, the term $2z_1$ may be computed just once decreasing to a total number of multiplications to 3. Aside from the lower number of operations needed, a Horner scheme allows also to reuse the same multiplier and adder unit.

Given the particular specificity of the problem, this approach can be further tailored so that intermediate results of the Horner scheme can be reused for the next polynomial evaluations.

Considering again the example, an intermediate result of the evaluation of the Horner scheme for the first polynomial is $2z_1 z_2 + z_2$. Instead of developing completely the Horner scheme also for the second polynomial, a solution could simply compute $z_1(2z_1 z_2 + 2z_2 + z_1)$ by reusing $2z_1 z_2 + z_2$ adding $z_1 + z_2$ and employ a single multiplier.

Such approaches may be employed for general differentiable objective function.

**Claims**

1. A method for controlling an electrical converter (12), the method comprising the steps of:

   receiving an actual electrical quantity (20) relating to the electrical converter (12) and a reference quantity (22);
   determining a possible future state of the electrical converter (12) by minimizing an objective function based on the actual electrical quantity and the reference quantity; and
   determining the next switching state for the electrical converter (12) from the possible future state of the electrical converter (12);
   wherein the objective function is iteratively optimized by:

   calculating optimized unconstrained optimization variables based on computing a gradient of the objective function with respect to optimization variables;
   calculating optimization variables for a next iteration step by projecting the unconstrained optimization variables on constraints; **characterized in that** the computation of the gradient and/or the projection is performed in parallel in more than one computing unit (44, 50, 70).

2. The method of claim 1,
   wherein the computation of the gradient is performed in parallel in more than one computing unit (44, 70).

3. The method of claim 1 or 2,
   wherein the computation of the gradient is performed in parallel to the projection.

4. The method of one of the preceding claims,
   wherein the iteration comprises:

   grouping the optimization variables into groups, such that each group of optimization variables is projectable separately from the other groups;
   wherein the computation of the gradient and/or the projection of the unconstrained optimization variables is performed in parallel using several computing units (44, 50, 70) of the controller (16).

5. The method of one of the preceding claims,
   wherein the iteration comprises scaling the constrained optimization variables by scaling factors;
   wherein the scaling is performed in more than one computing unit (52, 70) and/or wherein the scaling is performed in parallel to at least one of the gradient calculation and the projection.

6. The method of one of the preceding claims,
   wherein the gradient of the objective function comprises a matrix multiplied by a vector of optimization variables.

7. The method of claim 6,
   wherein a multiplication of entries of a column of the matrix with optimization variables is performed in parallel in more than one computational unit.

8. The method of claim 6,
   wherein a multiplication of entries of a row of the matrix with optimization variables is performed in parallel in more than one computational unit.

9. The method of one of the preceding claims,
   wherein the optimized unconstrained optimization variables are calculated by adding the negative gradient of the objective function to the optimization variables.

10. The method of one of the preceding claims, further comprising the steps of:

    determining a sequence of future switching states by minimizing the objective function;
    using the first future state from the sequence of future switching states as the next switching state to be applied to the electrical converter.

11. A controller (16) for an electrical converter (12), wherein the controller (16) comprises more than one computing unit (44, 50, 70) and is adapted for executing the method of one of the claims 1 to 10.

12. The controller (16) of claim 11 having an FPGA (38), the FPGA comprising at least one of:

at least one matrix multiplication unit (44) for multiplying the optimization variables with a matrix;
at least one projection unit (50) for projecting the unconstrained optimization variables;
at least one scaling unit (52) for scaling the constrained optimization variables by scaling factors.

13. The controller (16) of claim 12,
wherein the gradient of the objective function comprises a vector part that is based on a matrix equation of the actual quantity and/or the reference quantity;
wherein the matrix multiplication unit (44) is used for calculating the vector part before calculating the unconstrained optimization variables.

14. The controller (16) of claim 11, comprising:

a multi-core processor,
wherein the controller is adapted for executing the computation of the gradient and/or the projection for groups of optimization variables in parallel in more than one core (70) of the multi-core processor.

15. An electrical converter (12) comprising a controller (16) according to one of claims 11 to 14.

**Patentansprüche**

1. Ein Verfahren zum Steuern eines elektrischen Umrichters (12), wobei das Verfahren folgende Schritte umfasst:

Empfangen einer tatsächlichen elektrischen Größe (20) in Bezug auf den elektrischen Umrichter (12) und einer Referenzgröße (22);
Bestimmen eines möglichen zukünftigen Zustands des elektrischen Umrichters (12) durch Minimieren einer Zielfunktion basierend auf der tatsächlichen elektrischen Größe und der Referenzgröße; und
Bestimmen des nächsten Schaltzustands des elektrischen Umrichters (12) aus dem möglichen zukünftigen Zustand des elektrischen Umrichters (12);
wobei die Zielfunktion iterativ optimiert wird durch:

Berechnen von optimierten unbeschränkten Optimierungsvariablen basierend auf einem Errechnen eines Gradienten der Zielfunktion in Bezug auf Optimierungsvariablen;
Berechnen von Optimierungsvariablen für einen nächsten Iterationsschritt durch Projizieren der unbeschränkten Optimierungsvariablen auf Beschränkungen;
**dadurch gekennzeichnet, dass**

die Errechnung des Gradienten und/oder der Projektion parallel in mehr als einer Recheneinheit (44, 50, 70) durchgeführt wird.

2. Das Verfahren nach Anspruch 1,
wobei die Errechnung des Gradienten parallel in mehr als einer Recheneinheit (44, 70) durchgeführt wird.

3. Das Verfahren nach einem der Ansprüche 1 oder 2,
wobei die Errechnung des Gradienten parallel zu der Projektion durchgeführt wird.

4. Das Verfahren nach einem der vorhergehenden Ansprüche,
wobei die Iteration umfasst:

Gruppieren der Optimierungsvariablen in Gruppen, sodass jede Gruppe von Optimierungsvariablen getrennt von den anderen Gruppen projizierbar ist;

wobei die Errechnung des Gradienten und/oder die Projektion der unbeschränkten Optimierungsvariablen parallel unter Verwenden mehrerer Recheneinheiten (44, 50, 70) der Steuerung (16) durchgeführt werden.

5. Das Verfahren nach einem der vorhergehenden Ansprüche,
wobei die Iteration ein Skalieren der unbeschränkten Optimierungsvariablen durch Skalierungsfaktoren umfasst;
wobei das Skalieren in mehr als einer Recheneinheit (52, 70) durchgeführt wird und/oder wobei das Skalieren parallel zu der Gradientenberechnung und/oder der Projektion durchgeführt wird.

6. Das Verfahren nach einem der vorhergehenden Ansprüche,
wobei der Gradient der Zielfunktion eine Matrix umfasst, die durch einen Vektor von Optimierungsvariablen multipliziert wird.

7. Das Verfahren nach Anspruch 6,
wobei eine Multiplikation von Einträgen einer Spalte der Matrix mit Optimierungsvariablen parallel in mehr als einer Recheneinheit durchgeführt wird.

8. Das Verfahren nach Anspruch 6,
wobei eine Multiplikation von Einträgen einer Zeile der Matrix mit Optimierungsvariablen parallel in mehr als einer Recheneinheit durchgeführt wird.

9. Das Verfahren nach einem der vorhergehenden Ansprüche,
wobei die optimierten unbeschränkten Optimierungsvariablen durch Addieren des negativen Gradienten der Zielfunktion zu den Optimierungsvariablen berechnet werden.

10. Das Verfahren nach einem der vorhergehenden Ansprüche, ferner umfassend die folgenden Schritte:

Bestimmen einer Abfolge von zukünftigen Schaltzuständen durch Minimieren der Zielfunktion;
Verwenden des ersten zukünftigen Zustands aus der Abfolge von zukünftigen Schaltzuständen als den nächsten auf den elektrischen Umrichter anzuwendenden Schaltzustand.

11. Eine Steuerung (16) für einen elektrischen Umrichter (12), wobei die Steuerung (16) mehr als eine Recheneinheit (44, 50, 70) umfasst und dazu ausgelegt ist, das Verfahren nach einem der Ansprüche 1 bis 10 auszuführen.

12. Die Steuerung (16) nach Anspruch 11, die ein FPGA (38) aufweist, wobei das FPGA mindestens eines von Folgendem umfasst:

mindestens eine Matrixmultiplikationseinheit (44) zum Multiplizieren der Optimierungsvariablen mit einer Matrix;
mindestens eine Projektionseinheit (50) zum Projizieren der unbeschränkten Optimierungsvariablen;
mindestens eine Skalierungseinheit (52) zum Skalieren der unbeschränkten Optimierungsvariablen durch Skalierungsfaktoren.

13. Die Steuerung (16) nach Anspruch 12,
wobei der Gradient der Zielfunktion einen Vektorteil umfasst, der auf einer Matrixgleichung der tatsächlichen Größe und/oder der Referenzgröße basiert;
wobei die Matrixmultiplikationseinheit (44) zum Berechnen des Vektorteils vor Berechnen der unbeschränkten Optimierungsvariablen verwendet wird.

14. Die Steuerung (16) nach Anspruch 11, umfassend:

einen Mehrkernprozessor,
wobei die Steuerung zum Ausführen der Errechnung des Gradienten und/oder der Projektion für Gruppen von Optimierungsvariablen parallel in mehr als einem Kern (70) des Mehrkernprozessors ausgelegt ist.

15. Ein Elektrischer Umrichter (12), umfassend eine Steuerung (16) nach einem der Ansprüche 11 bis 14.

**Revendications**

1. Procédé pour commander un convertisseur électrique (12), le procédé comprenant les étapes consistant :

   à recevoir une quantité électrique actuelle (20) se rapportant au convertisseur électrique (12) et une quantité de référence (22) ;
   à déterminer un futur état possible du convertisseur électrique (12) en réduisant à un minimum une fonction d'objectif en se basant sur la quantité électrique actuelle et la quantité de référence ; et
   à déterminer le prochain état de commutation pour le convertisseur électrique (12) à partir du futur état possible du convertisseur électrique (12) ;
   dans lequel la fonction d'objectif est optimisée de manière itérative :

   en calculant des variables d'optimisation non contraintes optimisées en se basant sur le calcul d'un gradient de la fonction d'objectif par rapport à des variables d'optimisation ;
   en calculant des variables d'optimisation pour une prochaine étape d'itération en projetant les variables d'optimisation non contraintes sur des contraintes ;

   **caractérisé en ce que**
   le calcul du gradient et/ou de la projection est réalisé en parallèle dans au moins deux unités de calcul (44, 50, 70).

2. Procédé selon la revendication 1,
   dans lequel le calcul du gradient est réalisé en parallèle dans au moins deux unités de calcul (44, 70).

3. Procédé selon la revendication 1 ou 2,
   dans lequel le calcul du gradient est réalisé en parallèle à la projection.

4. Procédé selon l'une quelconque des revendications précédentes,
   dans lequel l'itération consiste :

   à regrouper les variables d'optimisation en groupes de telle sorte que chaque groupe de variables d'optimisation puisse être projeté de façon séparée depuis les autres groupes ;
   dans lequel le calcul du gradient et/ou de la projection des variables d'optimisation non contraintes est réalisé à l'aide de plusieurs unités de calcul (44, 50, 70) du dispositif de commande (16).

5. Procédé selon l'une quelconque des revendications précédentes,
   dans lequel l'itération consiste à pondérer les variables d'optimisation contraintes au moyen de facteurs de pondération ;
   dans lequel la pondération est réalisée dans au moins deux unités de calcul (52, 70) et/ou dans lequel la pondération est réalisée en parallèle au calcul de gradient et/ou à la projection.

6. Procédé selon l'une quelconque des revendications précédentes,
   dans lequel le gradient de la fonction d'objectif comprend une matrice multipliée par un vecteur de variables d'optimisation.

7. Procédé selon la revendication 6,
   dans lequel une multiplication d'entrées d'une colonne de la matrice avec des variables d'optimisation est réalisée en parallèle dans au moins deux unités de calcul.

8. Procédé selon la revendication 6,
   dans lequel une multiplication d'entrées d'une rangée de la matrice avec des variables d'optimisation est réalisée en parallèle dans au moins deux unités de calcul.

9. Procédé selon l'une quelconque des revendications précédentes,
   dans lequel les variables d'optimisation non contraintes optimisées sont calculées en ajoutant le gradient négatif de la fonction d'objectif aux variables d'optimisation.

10. Procédé selon l'une quelconque des revendications précédentes, comprenant en outre les étapes consistant :

à déterminer une séquence de futurs états de commutation en réduisant à un minimum la fonction d'objectif ;
à utiliser le premier futur état de la séquence de futurs états de commutation comme prochain futur état de commutation qui doit être appliqué au convertisseur électrique.

**11.** Dispositif de commande (16) pour un convertisseur électrique (12), dans lequel le dispositif de commande (16) comprend au moins deux unités de calcul (44, 50, 70) et est conçu pour exécuter le procédé selon l'une quelconque des revendications 1 à 10.

**12.** Dispositif de commande (16) selon la revendication 11 ayant une matrice intégrée prédiffusée programmable par l'utilisateur (FPGA) (38), la matrice FPGA comprenant :

au moins une unité de multiplication de matrice (44) pour multiplier les variables d'optimisation avec une matrice ; et/ou
au moins une unité de projection (50) pour projeter les variables d'optimisation non contraintes ; et/ou
au moins une unité de pondération (52) pour pondérer les variables d'optimisation contraintes au moyen de facteurs de pondération.

**13.** Dispositif de commande (16) selon la revendication 12,
dans lequel le gradient de la fonction d'objectif comprend une partie vectorielle qui est basée sur une équation matricielle de la quantité actuelle et/ou de la quantité de référence ;
dans lequel l'unité de multiplication de matrice (44) est utilisée pour calculer la partie vectorielle avant de calculer les variables d'optimisation non contraintes.

**14.** Dispositif de commande (16) selon la revendication 11, comprenant :

un processeur multicoeur,
dans lequel le dispositif de commande est conçu pour exécuter le calcul du gradient et/ou de la projection pour des groupes de variables d'optimisation en parallèle dans au moins deux coeurs (70) du processeur multicoeur.

**15.** Convertisseur électrique (12) comprenant un dispositif de commande (16) selon l'une quelconque des revendications 11 à 14.

Fig. 1

Fig. 2

16

44                                          50        52

40                                                              54

42

38        44                    46        48        50        52

## Fig. 3

16

70        70        70

## Fig. 5

Fig. 4

EP 2 733 842 B1

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2469692 A1

**Non-patent literature cited in the description**

- **S. RICHTER ; C. N. JONES ; M. MORARI.** Real-time input-constrained MPC using fast gradient methods. *Decision and Control, 2009 held jointly with the 2009 28th Chinese Control Conference, CDC/CCC 2009, Proceedings of the 48th IEEE Conference on,* 2010, 7387-7393

- **STEFAN RICHTER ; SEBASTIEN MARIETHOZ.** High-speed online MPC based on a fast gradient method applied to power converter control. *American Control Conference,* 2010